# EUROPÄISCHE PATENTANMELDUNG

(11) **EP 0 692 699 A1**
(43) Veröffentlichungstag der Anmeldung: **17.01.1996**
(21) Anmeldenummer: 94111004.1
(22) Anmeldetag: 14.07.1994
(51) Int. Cl.: G01D 1/00, G01D 11/28, B60Q 3/04

(54) **Beleuchtete Anzeigevorrichtung**

(71) Anmelder: Eta SA Fabriques d'Ebauches, CH-2540 Grenchen (CH)
(72) Erfinder: Kopp, Klaus, D-78052 VS/Riedtheim (DE); Mäder, Jean-Pierre, CH-2540 Grenchen (DE)
(74) Vertreter: Patry, Didier Marcel Pierre

(57) **Zusammenfassung**

Beleuchtete Anzeigevorrichtung, umfassend eine Skalenscheibe und einem vor dieser drehbaren Zeiger, beide aus lichtleitendem Material, sowie eine Lichtquellenanordnung zum Einspeisen von Licht in die Skalenscheibe und den Zeiger, wobei die Lichtquellenanordnung zur Einspeisung von Licht nur in den Zeiger ausgebildet und angeordnet ist und dieser alle erforderlichen Lichtumlenkflächen aufweist.

## Beschreibung

Die Erfindung betrifft eine beleuchtete Anzeigevorrichtung nach dem Obergegriff des Anspruchs 1.

Die Schrift DE-OS 33 00 271 zeigt eine Anzeigevorrichtung mit einer Lichtleiterscheibe und einer einzigen, unterseitig angebrachten Lichtquelle. Die Lichtleiter-scheibe weist mehrere Umlenkflächen auf, welche eine Aufteilung des von der Lichtquelle ausgehenden Strahles in zwei Strahlen bewirkt. Weitere Umlenkflächen lenken diese beiden Strahlen schliesslich auf den Zeiger.

Obwohl die vorgeschlagene Lösung eine gleichmässige Zeigerbeleuchtung ermöglicht, wird der Nachteil einer aufwendigen Ausgestaltung der Lichtleiterscheibe als notwendiges Uebel in Kauf genommen.

Die Schrift DE-OS 41 21 248 zeigt eine ähnliche Lösung, bei der das Licht wiederum zunächst in den Skalenträger und dann über Umlenkflächen in den Zeiger gelenkt wird.

Auch bei dieser Lösung ist die aufwendige Ausgestaltung des Skalenträgers, welcher das grösste Bauelement der Anzeigevorrichtung darstellt, ein bedeutender Nachteil.

Bei der in der Schrift DE-OS 28 48 001 gezeigten Lösung wird die Skalenscheibe von aussen, d.h. von ihrem Umfangsbereich her beleuchtet. Das die Skalenscheibe durchflutende Licht wird mittels im Zeiger vorgesehener Umlenkflächen in die Zeigerfahne geleitet.

Diese Ausführung weist den Nachteil auf, dass die im Umfangsbereich vorgesehenen Lichtquellen einerseits einen zusätzlichen Raumbedarf beanspruchen, anderseits insbesondere durch die elektrischen Verbindungen zusätzliche Kosten hervorrufen.

Der Erfindung liegt daher die Aufgabe zugrunde, eine Anzeigevorrichtung der eingangs genannten Art zu schaffen, welche
- eine gleichmässige Anzeige- und/oder Zeigerbeleuchtung sicherstellt,
- platzsparend ist,
- flexibel hinsichtlich Bauteilaustausch ist,
- aus wenigen, einfachen Elementen besteht, die jeweils einen geringen Herstellungsaufwand erfordern und somit kostengünstig sind, und
- vorzugsweise geringe Abwärme erzeugt.

Die Lösung der erfindungsgemässen Aufgabe ergibt sich aus den Merkmalen des Anspruchs 1; die Unteransprüche definieren bevorzugte Ausgestaltungen.

Da bei der erfindungsgemässen Lösung der Zeiger bestehend aus Zeigerachse, Zeigernabe und Zeigerfahne vorzugsweise aus einem Stück gegossen ist und die gesamte Lichtumlenkung im Zeiger vorgesehen ist, reduzieren sich der Gesamtaufwand der Anzeigevorrichtung und mit ihm die Kosten erheblich.

Ebenfalls kostensparend wirkt sich der Verzicht auf eine herausragende Motorachse aus Stahl aus, da diese durch eine an den Zeiger angespritzte Kunststoffwelle ersetzt wird. Die in der Motorachse vorgesehe Bohrung ist wesentlich einfacher und kostengünstiger.

Durch die Verwendung von kostengünstigen LED's als Lichtquellen entsteht weniger Abwärme und der Gesamtaufbau wird kompakter.

Die erfindungsgemässe Lösung eignet sich besonders in der Automobil- und der Uhrenindustrie für Geschwindingkeits-, Drehzahl-, Tank-, Temperatur-, Zeitanzeigen oder ähnliches.

Nachfolgend ist eine Ausführungsform der erfindungsgemässen Anzeigevorrichtung rein beispielsweise anhand der Zeichungen näher erläutert. Es zeigen :
- Fig.1: eine Ausführungsform der Anzeigevorrichtung im Vertikalschnitt entlang der Linie I-I in Fig.2,
- Fig.2: ausschnittweise eine Draufsicht, teilweise weggebrochen
- Fig.3: eine perspektivische Ansicht, teilweise geschnitten.

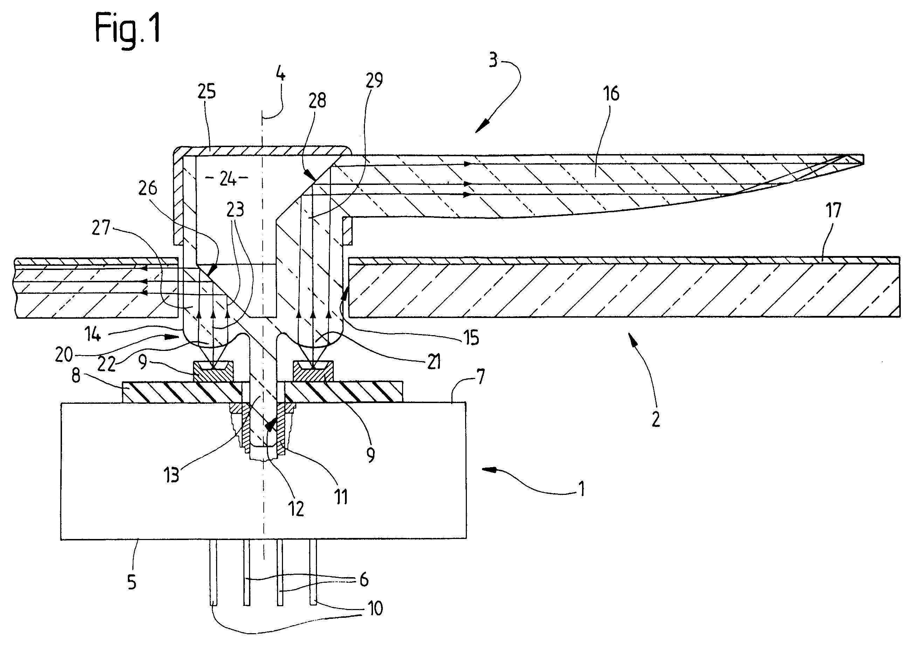

Die in Fig.1-3 dargestellte Anzeigevorrichtung weist einen Schrittmotor 1 und eine Lichtleiterscheibe 2 auf, die mit einem nichtgezeigten Gehäuse fest verbunden sind. Ein drehbarer Zeiger 3 steht über eine gemeinsame, orthogonal durch die Lichtleiterscheibe 2 verlaufende Drehachse 4 in direkter Antriebsverbindung mit dem Schrittmotor 1.

Der Zeiger 3 wie auch die Lichtleiterscheibe 2 bestehen aus einem durchscheinendem Material wie PMMA oder PC.

Der Schrittmotor 1 weist eine Motorunterseite 5, an welcher Motorspeiseanschlüsse 6 vorgesehen sind, und eine Motoroberseite 7 auf, auf der sich eine Leiterplatte 8 befindet. Auf dieser Leiterplatte 8 sind konzentrisch um und möglichst nahe an der Drehachse 4 Lichtquellen 9 angeordnet. Als Lichtquellen 9 eignen sich vorzüglich LED's 9, die eine kleine Abmessung und eine lange Lebensdauer haben sowie im Vergleich zu Glühlampen wesentlich billiger sind. Vorzugsweise sind drei bis fünf LED's 9 vorgesehen. Die Leiterplatte 8 weist nicht gezeigte Leiterbahnen auf, welche die LED's 9 in Reihe schalten. Dadurch sind lediglich zwei LED-Speiseanschlüsse 10 notwendig, die den Schrittmotor 1 durchdringen und vorteilhafterweise an der Motor-unterseite 5 im Bereich der Motorspeiseanschlüsse 6 aus dem Schrittmotor 1 herausragen. Die LED- 9 und Motor-speiseanschlüsse 6 sind mit einer nicht gezeigten Steuerschaltung verbunden. Dadurch, dass sich die LED- und Motorspeiseanschlüsse 6, 10 in unmittelbarer Nähe befinden, wird ein kleinstmöglicher Installations- und Montageaufwand erzielt.

Der Schrittmotor 1 weist eine Motorachse 11 auf, die weder an der Motorunter- 5, noch an der Motoroberseite 7 herausragt, sondern eine Längsbohrung 12 an der Motoroberseite 7 aufweist. In diese Längsbohrung 12 ist eine Zeigerwelle 13 eingepresst, die einen Bestandteil des aus einem Stück im Spritzguss gefertigten Zeigers 3 bildet.

An die Zeigerwelle 13 schliesst eine Zeigernabe 14 an, die durch eine in der Lichtleiterscheibe 2 vorgesehene Bohrung 15 berührungsfrei hindurchführt. Oberhalb der Lichtleiterscheibe 2 schliesst eine Zeigerfahne 16 an die Zeigernabe 14 an und verläuft im wesentlichen parallel zur Lichtleiterscheibe 2.

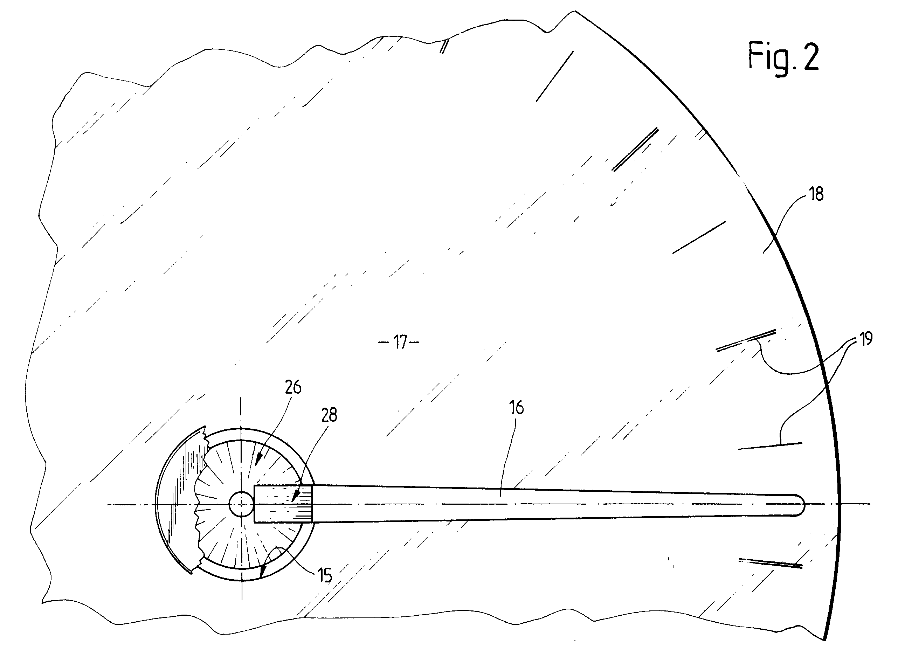

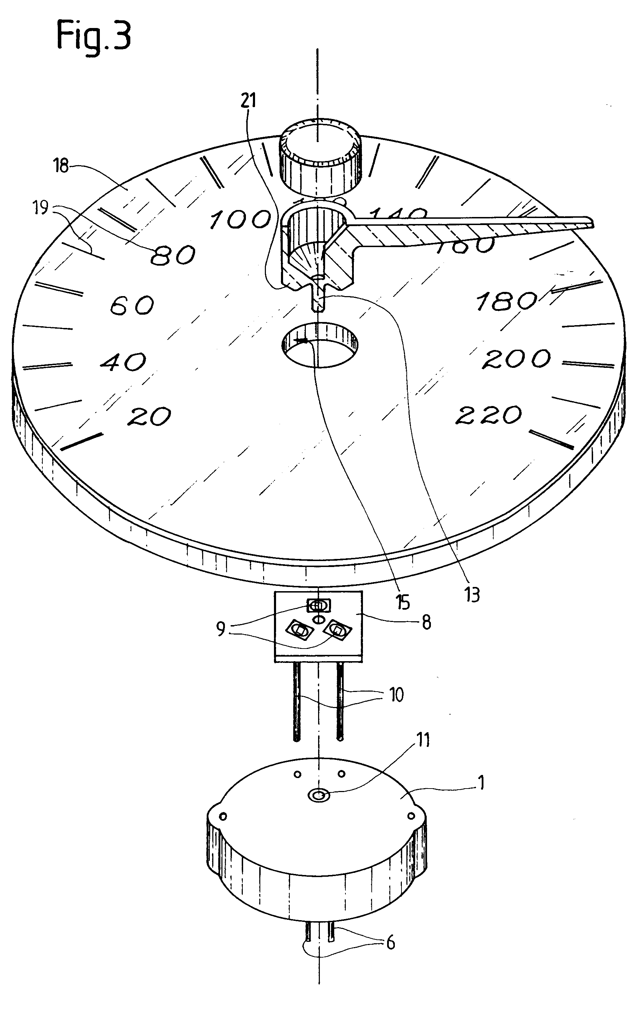

Die Lichtleiterscheibe 2 weist eine Oberseite 17 auf, auf welcher eine Skala 18 angebracht ist. Die Scheibe 2 besteht aus einem durchscheinenden Material und ist mit Indices 19 versehen (Fig.2, 3).

Die Zeigernabe 14 weist eine Unterseite 20 auf, an welcher ein bezüglich der Drehachse 4 konzentrischer, ringförmiger, im Queerschnitt elliptisch ausgebildeter Wulst 21 mit einer Lichteinkoppelfläche 22 vorgesehen ist (Fig.1). Die elliptische Ausbildung dieses Wulstes 21 ermöglicht eine Parallelisierung von Lichtstrahlen 23, die von den näherungsweise als punktförmig anzunehmenden Lichtquellen 9 ausgehen.

Die Zeigernabe 14 weist einen Hohlraum 24 auf, der oberseitig mit einer Zeigerkappe 25 abgeschlossen ist und an eine im Querschnitt kegelstumpfförmige Umlenkfläche 26 angrenzt, die sich oberhalb des Wulstes 21 auf der Höhe der Lichtleiterscheibe 2 befindet. Diese Umlenkfläche 26 weist bezüglich der Drehachse 4 eine Neigung von 45° auf (Fig.1) und erstreckt sich über annähernd den vollen Umkreis um die Drehachse 4 (Fig.2). Zwischen dieser Umlenkfläche 26 und dem Wulst 21 ist ein im wesentlichen zylindrischer Lichtzuführbereich 27 vorgesehen.

Eine weitere, ebene Umlenkfläche 28, die ebenfalls bezüglich der Drehachse 4 eine Neigung von 45° aufweist, hat die Breite der Zeigerfahne 16 und schliesst mit der Kegelstumpfförmigen Umlenkfläche 26 den Vollkreis. Die ebene Umlenkfläche 28 befindet sich oberhalb der Lichtleiterscheibe 2 auf der Höhe der Zeigerfahne 16. Zwischen dieser Umlenkfläche 28 und dem Wulst 21 ist in der Zeigernabe 14 ein im wesentlichen prismatischer Lichtzuführbereich 29 vorgesehen.

Das Licht durchflutet die Lichtleiterscheibe 2 und den Zeiger 3 gemäss Fig.1 wie folgt:
Aus den Lichtquellen 9 stammende Lichtstrahlen 23 werden an der Lichteinkoppelfläche 22 des elliptischen Wulstes 21 nach dem Gesetz der Lichtbrechung umgelenkt und verlaufen in der Zeigernabe 14 parallel zur Drehachse 4.

Der grösste Anteil der Lichtstrahlen 23 durchläuft den zylindrischen Lichtzuführbereich 27 und trifft auf die kegelstumpfförmige Umlenkfläche 26, wird bezüglich der Drehachse 90° nach aussen hin, dem Prinzip der Totalreflexion entsprechend, umgelenkt und in die Lichtleiterscheibe 2 hineingeführt.

Ein kleinerer Anteil der Lichtstrahlen 23 durchläuft den prismatischen Lichtzuführbereich 29, trifft auf die ebene Umlenkfläche 28, wird dort im Winkel von 90° totalreflektiert und in die Zeigerfahne 16 gelenkt.

Durch eine dem Stand der Technik gemässe Ausgestaltung der Lichtleiterscheibe 2 können die von der kegelstumpfförmigen Umlenkfläche 26 kommenden Lichtstrahlen 23 gleichmässig in der Lichtleiterscheibe 2 verteilt werden, so dass die gesamte Lichtleiterscheibe 2, beziehungsweise die Skala 18, gleichmässig auch unmittelbar unter der Zeigerfahne 16 beleuchtet wird.

## Patentansprüche

1. Beleuchtete Anzeigevorrichtung, umnfassend eine Skalenscheibe und einen vor dieser drehbaren Zeiger, beide aus lichtleitendem Material, sowie eine Lichtquellenanordnung zum Einspeisen von Licht in die Skalenscheibe und den Zeiger, dadurch gekennzeichnet, dass die Lichtquellenanordnung (8 bis 10) zur Einspeisung von Licht nur in den Zeiger (3) ausgebildet und angeordnet ist und dieser alle erforderlichen Lichtumlenkflächen (26, 28) aufweist.

2. Vorrichtung nach Anspruch 1, dadurch gekennzeichnet, dass die Lichtquellenanordnung mindestens eine lichtemittierende Diode (9) umfasst.

3. Vorrichtung nach Anspruch 1 oder 2, dadurch gekennzeichnet, dass der Zeiger eine Nabe (14) umfasst, unter der die Lichtquellenanordnung angeordnet ist.

4. Vorrichtung nach Anspruch 3, dadurch gekennzeichnet, dass die Nabe eine der Lichtquellenanordnung zugekehrte Lichteintrittsfläche (22) mit einer Form derart aufweist, dass die Lichtstrahlen hinter dieser Eintrittsfläche im wesentlichen parallel zur Zeigerachse (4) verlaufen.

5. Vorrichtung nach Anspruch 4, dadurch gekennzeichnet, dass die Nabe durch eine zentrale Bohrung (15) der Skalenscheibe (2) ragt und in Höhe von deren Dickenabmessung eine erste im wesentlichen kegelstumpfförmige totalreflektierende Umlenkfläche (26) aufweist.

6. Vorrichtung nach Anspruch 4 oder 5, dadurch gekennzeichnet, dass der Zeiger eine an die Nabe anschliessende Fahne (16) aufweist und dass in Höhe der Dicke der Fahne die Nabe eine zweite im wesentlichen ebene totalreflektierende Umlenkfläche (28) aufweist.

7. Vorrichtung nach einem Ansprüche 4 bis 6, dadurch gekennzeichnet, dass die Nabe einen von Umlenkflächen begrenzten Hohlraum (24) aufweist.

8. Vorrichtung nach Anspruch 7, dadurch gekennzeichnet, dass der Hohlraum zu der der Lichteintrittsfläche abgekehrten Seite offen ist.

9. Vorrichtung nach Anspruch 8, dadurch gekennzeichnet, dass das offene Ende der Nabe mittels einer Kappe (25) abgedeckt ist.

10. Vorrichtung nach einem vorangehenden Ansprüche, bei der der Zeiger von einer Motorwelle angetrieben ist, dadurch gekennzeichnet, dass die Motorwelle (11) eine Bohrung (12) aufweist, in die ein Wellenstumpf (13) des Zeigers eingepresst ist.

11. Vorrichtung nach Anspruch 10, dadurch gekennzeichnet, dass die Lichteintrittsfläche der Nabe an einem den Wellenstumpf konzentrisch umschliessenden Wulst (21) vorgesehen ist.

12. Vorrichtung nach einem der vorangehenden Ansprüche, dadurch gekennzeichnet, dass der Zeiger ein einstückiges Spritzgussteil ist.

13. Vorrichtung nach Anspruch 10, dadurch gekennzeichnet, dass zwischen dem Motor (1) und der Lichteintrittsfläche die Lichtquellenanordnung angeordnet ist.

14. Vorrichtung nach Anspruch 13, dadurch gekennzeichnet, dass die Lichtquellenanordnung auf dem Motor befestigt ist und ihre Zuleitungen (10) sich durch den Motor hindurch zu seiner Rückseite erstrecken, wo auch die Speiseanschlüsse (6) des Motors angeordnet sind.

15. Vorrichtung nach Anspruch 2 und Anspruch 13, dadurch gekennzeichnet, dass die Lichtquellenanordnung mehrere in Serie geschaltete lichtemittierende Dioden umfasst.
